# EUROPÄISCHE PATENTSCHRIFT

(11) **EP 1 117 731 B1**
(45) Veröffentlichungstag und Bekanntmachung des Hinweises auf die Patenterteilung: **26.02.2003**
(21) Anmeldenummer: 99945983.7
(22) Anmeldetag: 16.08.1999
(51) Int. Cl.: C08J 5/18, B29C 47/88

(54) **OPTISCH ISOTROPE POLYCARBONAT-FOLIEN SOWIE VERFAHREN ZU DEREN HERSTELLUNG**
OPTICALLY ISOTROPIC POLYCARBONATE FILMS AND A METHOD FOR THE PRODUCTION THEREOF
FILMS EN POLYCARBONATE OPTIQUEMENT ISOTROPES, AINSI QUE LEUR PROCEDE DE FABRICATION

(30) Priorität: 14.08.1998 DE 19836800
(43) Veröffentlichungstag der Anmeldung: 25.07.2001
(73) Patentinhaber: Röhm GmbH & Co. KG, 64293 Darmstadt (DE)
(72) Erfinder: NUMRICH, Uwe, 64846 Gross-Zimmern (DE); HOFMANN, Klaus, D-64347 Griesheim (DE); EMERSON, Roger, Hugh, Milton Keynes MK5 6DL (GB); PFAFF, Thomas, D-69502 Hemsbach (DE); MEIER-KAISER, Michael, D-64665 Alsbach-Hähnlein (DE)
(86) Internationale Anmeldenummer: EP9905996
(87) Internationale Veröffentlichungsnummer: WO00009592

(56) Entgegenhaltungen:
- NL-A- 8 602 018
- PATENT ABSTRACTS OF JAPAN vol. 011, no. 364 (M-646), 27. November 1987 (1987-11-27) & JP 62 140817 A (MITSUBISHI GAS CHEM CO INC), 24. Juni 1987 (1987-06-24)
- PATENT ABSTRACTS OF JAPAN vol. 1998, no. 13, 30. November 1998 (1998-11-30) & JP 10 217313 A (TEIJIN CHEM LTD), 18. August 1998 (1998-08-18)
- DATABASE WPI Section Ch, Week 199412 Derwent Publications Ltd., London, GB; Class A23, AN 1994-097550 XP002125892 & JP 06 048458 A (MITSUI TOATSU CHEM INC), 22. Februar 1994 (1994-02-22)
- PATENT ABSTRACTS OF JAPAN vol. 1996, no. 10, 31. Oktober 1996 (1996-10-31) & JP 08 156120 A (MITSUBISHI GAS CHEM CO INC), 18. Juni 1996 (1996-06-18)
- DATABASE WPI Section Ch, Week 198652 Derwent Publications Ltd., London, GB; Class A32, AN 1986-342395 XP002125893 & JP 61 255830 A (IDEMITSU PETROCHEM CO), 13. November 1986 (1986-11-13)
- PATENT ABSTRACTS OF JAPAN vol. 017, no. 074 (M-1366), 15. Februar 1993 (1993-02-15) & JP 04 275129 A (UBE IND LTD), 30. September 1992 (1992-09-30)
- PATENT ABSTRACTS OF JAPAN vol. 011, no. 235 (M-612), 31. Juli 1987 (1987-07-31) & JP 62 048523 A (TEIJIN CHEM LTD), 3. März 1987 (1987-03-03)

## Beschreibung

### Gebiet der Erfindung

Die Erfindung betrifft beiderseitig hochglänzende optisch isotrope Polycarbonat-Folien mit hoher Reinheit sowie ein wirtschaftliches Extrusionsverfahren zu ihrer Herstellung und die Verwendung der erfindungsgemäßen Folien als Abdeckfolien für optische Datenträger wie beispielsweise Compact-Disks oder DVD-Disks.

Die erfindungsgemäßen Folien können auch als Trägermaterialien für die informationstragende Schicht dienen, wodurch sich extrem dünne optische Datenträger herstellen lassen.

### Stand der Technik

Die Forderungen die an Platten und Folien aus Kunststoffen gestellt werden, damit sie sich zur Herstellung oder Abdeckung von optisch lesbaren Datenspeichern eignen, sind allgemein bekannt, vgl. J. Hennig, Polymere als Substrate für optische Plattenspeicher, Angew. Makromolekulare Chemie, Band 145/146, 1986 (Seite 391-409).
Ferner dürfen die Platten und Folien keine Fremdteilchen mit mehr als 10 Mikrometer Größe enthalten und es dürfen sich bei der Verarbeitung keine Blasen und Lunker bilden. Bei der Formung soll sich eine möglichst geringe optische Doppelbrechung ergeben.

Optische Datenträger in Form von Compact-Disks werden bisher weitgehend im Spritzgußverfahren hergestellt. Andere Verfahren, mit denen auch optische Datenträger von größeren Formaten hergestellt werden können, gehen von Vollplatten aus Kunststoff aus, die nachträglich mit der informationstragenden Schicht versehen werden.

Die EP 461 485 (Röhm GmbH) beschreibt eine extrudierte Vollplatte oder Folie aus Kunststoff und ihr Herstellungsverfahren. Die Polycarbonat-Schmelze wird bei ca. 290 °C aus einer Breitschlitzdüse eines Extruders ausgepreßt und in einem Walzenstuhl, bestehend aus einer hochglänzenden Stahlwalze und einer wattierten Gummiwalze, kalandriert. Man erhält auf diese Weise eine einseitig hochglänzende einseitig matte Polycarbonat-Folie mit einer Dicke von 450 µm.

EP 351 886 (Bayer AG) beschreibt ein Gießverfahren zur Herstellung von Polycarbonat-Folien. Das Polycarbonat mit einem mittleren Molekulargewicht von 98.000 wird in Methylenchlorid gelöst und die Lösung auf ein langsam rotierenden beheizten und polierten Zylinder über eine Rakelvorrichtung aufgegeben. Man erhält so einen klaren durchsichtigen Film mit einer Dicke von 200 µm. Es ergibt sich eine starke Doppelbrechung mit einem Gangunterschied von Δ G = 74 nm. Die so erhaltenen nicht doppelbrechungsfreien Polycarbonat-Folien werden eingespannt und mittels eines Quarzheizstrahlers zwischen 5 und 60 Sekunden beheizt. Damit erreicht man eine Reduktion der unerwünschten Doppelbrechung auf nicht mehr störende Werte.

JP 07126375 (Teijin Kasei Ltd.) beschreibt die Herstellung einer Folie aus Polycarbonat mit geringer Doppelbrechung. Die geringe spezifische Doppelbrechung der Polycarbonat-Folie wird durch Verwendung einer Schutzschicht aus Polyolefinen erreicht.

### Kritik des Standes der Technik

Herkömmliche Verfahren zu Herstellung von dünnen optisch isotropen Polycarbonat-Folien arbeiten entweder auf Basis von kostenaufwendigen Gießverfahren, bei denen aufwendige apparative Maßnahmen zur Vermeidung der Emmission giftiger organischer Lösungsmittel durchgeführt werden müssen, oder auf der Basis von aufwendigen Extrusionsverfahren, bei denen in einem ersten Schritt entweder eine einseitig matte Polycarbonat-Folie oder eine optisch anisotrope Polycarbonat-Folie hergestellt wird.

Diese letzt genannten optisch anisotropen Extrusions-Folien müssen in nachfolgenden Schritten in beidseitig glänzende optisch isotrope Extrusions-Folien umgewandelt werden. Ein zweistufiges Extrusionsverfahren ist extrem kostenaufwendig. Die Folien sind, obwohl optisch einigermaßen isotrop, nicht mit optimalen Oberflächeneigenschaften ausgestattet.

### Aufgabe

Der Erfindung lag daher die Aufgabe zugrunde, beidseitig glänzende optisch isotrope Polycarbonat-Folien unter Vermeidung der im Stand der Technik geschilderten produkttechnischen und wirtschaftlichen Nachteile herzustellen. Die Folien sollen optisch und mechanisch isotrop sein, eine hohe Oberflächenqualität aufweisen und möglichst hohe optische Reinheit besitzen.

### Lösung

Überraschenderweise lassen sich optisch hochwertige Polycarbonat-Extrusionsfolien im Dickenbereich < 200 µm, bevorzugt 15 bis 150, besonders bevorzugt 30 bis 100, insbesondere 60 bis 90 µm, mittels des Chill-Roll Schmelzegießverfahren mit dem geforderten Eigenschaftsprofil herstellen. Zum Erreichen des hohen Niveaus an optischer Reinheit wird bevorzugt eine relativ niedermolekulare Polycarbonat-Spritzgußmasse verwendet, wie sie zur Herstellung von spritzgegossenen optischen Datenträgern in großer Menge eingesetzt werden.

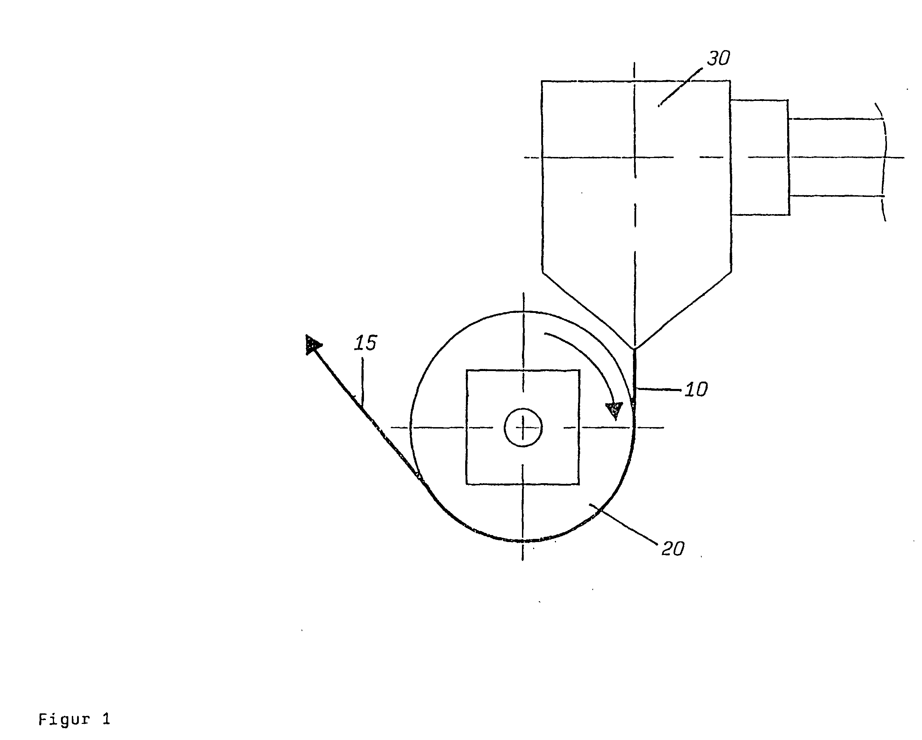

Das Molekulargewicht M_{w} der eingesetzten Polycarbonat-Formmasse liegt zwischen 10.000 bis 40.000, bevorzugt zwischen ca. 15.000 und zwischen ca. 20.000 (Spritzgußmasse). Insbesondere die nicht für Extrusionsanwendung vorgesehene Spritzgußmasse läßt sich überraschenderweise mittels des Chill-Roll-Verfahrens mit hoher Wirtschaftlichkeit und unter Vermeidung von giftigen Lösungsmitteln zu Folien mit dem geforderten Eigenschaftsprofil extrudieren (siehe Figur 1).

### Ausführung der Erfindung

Wesentlich für die Erfindung ist die Anwendung des Schmelzegießverfahrens, auch Chill-Roll-Verfahren genannt. Dabei wird der aus der Düse austretende Schmelzefilm an eine Kühlwalze (Chill Roll Walze) angelegt und dabei abgekühlt. Hierdurch ist die Herstellung extrem dünner Folien (bis herunter zu 15 µm) mit geringer optischer Anisotropie (nahezu isotroper Folien) möglich.

Unter nahezu isotrop ist zu verstehen, daß ein das Folienmedium durchdringender Lichtstrahl eine nur vernachlässigbar geringe Ablenkung erfährt, z. B. einen Gangunterschied von höchstens 50 nm, bevorzugt höchstens 35 nm, besonders bevorzugt höchstens 25 nm.

Die Verarbeitungstemperatur für die Polycarbonat-Formmasse liegt zwischen 210 und 260, bevorzugt 220 bis 240 °C.

Zur Vermeidung von Kristallitablagerungen in der Düse ist es günstig, die Extrusionsanlage bei einer Verarbeitungstemperatur von 250 bis 260 °C zu starten. Zur Erreichung einer möglichst geringen Gelkörperausbildung kann die Verarbeitungstemperatur nach der Anfahrphase von etwa 10 Minuten bis etwa 1 Stunde sukzessive auf 220 bis 240 °C abgesenkt werden.

Zur Vermeidung von Düsenlinien bzw. Extrusionsstreifen auf der extrudierten Folie empfiehlt es sich, die innere Extrusionsdüsenoberfläche, die günstigerweise verchromt ist, insbesondere den Düsenlippenbereich, zu polieren. Für den Extrusionsdüsenlippenbereich soll die Rauhtiefe R_{A} nach DIN 4768 0,025 bis 0,002, bevorzugt 0,015 bis 0,002, besonders bevorzugt 0,01 bis 0,002 betragen. Die Rauhigkeit des Verteilerkanals soll günstigerweise höchstens 0,1 betragen.

Eine weitere Verbesserung der Güte, insbesondere die Vermeidung von Düsenlinien bzw. Extrusionsstreifen, der extrudierten Folie kann errreicht werden, wenn man die innere Oberfläche der Extrusionsdüse mit einem Polycarbonat-Schmelze abweisenden Agens versieht. Dies kann durch ein Bestreichen der gereinigten inneren Düsenoberfläche mit einem solchen Agens, z. B. Silikonöl, geschehen. Das Agens soll die Oberflächenrauhigkeit insgesamt nicht oder nur unwesentlich erhöhen, bevorzugterweise jedoch erniedrigen.

Ein weiterer Faktor, der die Güte der extrudierten Polycarbonat-Folie beeinflussen kann, sind geringfügige Verunreinigungen der Polycarbonat-Schmelze. Es ist deshalb günstig, zwischen Extrusionszylinder und Extrusionsdüse einen Schmelzefilter zu installieren. Die Maschenweite des Filtereinsatzes soll 5 bis 50 µm betragen.

Eine weitere Maßnahme die zu Polycarbonat-Folien hoher Güte beitragen kann, ist die Beimischung eines Gleitmittels zur Formmasse-Formulierung. Übliche Mengen liegen zwischen 0,01 und 1 Gew.-% bezogen auf die Formmasse. Beipiele für geeignete Gleitmittel sind partiell oxidiertes Polyethylen, Pentaerythritstearat oder C₁₀ bis C₂₀-Feattsäure-Ester.

Hohe optische Reinheit sowie hohe optische Isotropie sind die wesentliche Basisanforderung für den Einsatz von Folien bei den genannten Anwendungen.

Mit Hilfe des erfindungsgemäßen Verfahren lassen sich optisch hochwertige Polycarbonat-Folien herstellen. Unter optisch hochwertig ist insbesondere zu verstehen: Eine niedrige Doppelbrechung, eine hohe Transmission, geringe Ausbildung von Extrusionstreifen bzw. Düsenlinien (meßbar durch eine geringe Ablenkung linear polarisierten Lichts) sowie eine geringe Anzahl von Gelkörpern pro Flächeneinheit.

Bevorzugt weist die erfindungsgemäße Folie in keinem Bereich der Oberfläche eine Ablenkung linear polarisierten Lichts von größer als 2 Winkelminuten auf.

Die Messung erfolgt mittels der Registrierung des Ablenkungswinkels, den ein Laserstrahl erfährt, der die Folie durchdringt.
Hierzu wird die sogenannte Laser-Deflektion-Methode eingesetzt. Über die gesamte Extrusionsbreite wird, mittels eines mit einem Schrittmotor betriebenen Verschiebetisches, die Winkelabweichung gemessen, welche ein Laserstrahl von 632,8 nm bei senkrechten Durchstrahlen der Folie quer zur Extrusionsrichtung erfährt. Der transmittierte Strahl durchläuft dabach zur Vergrößerung des Ablenkungswinkels ein Fernrohr und trifft auf einen positionsempfindlichen digitalen optischen Sensor. Dieser bestimmt den Ort des Zentrums des auf ihn auftreffenden Lichtpunkts und gibt ihn über eine serielle Schnittsteile in x und y - Koordinaten aus. Für die Auswertung von Düsenlinien ist davon nur die y-Komponente relevant.

Mögliche Verwendungen der erfindungsgemäßen Folien sind Verkratzschutzfolien für optische Datenträger, als Trägermaterialien für optische Datenträger, als Basismaterialien für die Herstellung von Overlayfolien für Displays und Bildschirme.

### BEISPIELE

### Beispiel 1

### Herstellung der erfindungsgemäßen Folie durch Chill-Roll-Extrusion einer Polycarbonat-Formmasse für optische Spritzgußanwendungen.

Die mittels eines Ein- oder Doppelschneckenextruders erzeugte Schmelze (zur Sicherstellung der Konstanz des Schmelzestroms kann optional eine Schmelzepumpe eingesetzt werden) wird über einen für die Folienextrusion ausgelegte automatisch regelbare Düse der Chill-Roll-Walze (Rauhtiefe R_{A} 0,002 - 0,006, R_{T} = 0,02 - 0,004, gemessen nach DIN 4768) zugeführt. Die Rauhtiefe der R_{A} des Extrusionsdüsenlippenbereiches beträgt 0,02. Die Düseninnenoberfläche wurde mit Silikonöl Polycarbonat-Schmelze-abweisend ausgerüstet. Die Temperatur des Schmelzestroms beträgt
235 °C ± 5 °C. Der Schmelzefilm legt sich tangential an die Walzenoberfläche an und umschlingt die Walze um ca. 180°. Nach Umschlingung weiterer Walzen wird die Dicke der Folienbahn durch ein traversierend angeordnetes, berührungsloses Meßsystem ermittelt und mittels elektronisch verarbeiteter Informationen die Schmelzeverteilung der Düse mittels eines Dehnbolzensystems über die Breite geregelt. Die relativierenden Folien besitzen hohe optische und auch mechanische Isotropie. Letzteres ist besonders wichtig für das Verarbeitungsverhalten, z. B. Stanzen auf CD-Größe, da PC-Spritzgußmassen aufgrund ihres niedrigen Molekulargewichtes deutlich spröder als PC-Extrusionsmassen sind.

### Vergleichsbeispiel 1

### Polycarbonat-Folie hergestellt im Glättprozeß, Dicke 0,13 mm.

Die mittels eines Ein- oder Doppelschneckenextruders erzeugte Schmelze (zur Sicherstellung der Konstanz des Schmelzestroms kann optional eine Schmelzepumpe eingesetzt werden) wird über eine für Folienextrusion ausgelegte Düse dem Glättwerk zugeführt. Die Schmelze wird im definierten Walzenspalt dimensioniert und durch die Oberfläche der temperierten, spiegelhochglanzpolierten Walzen (Rauhtiefe R_{A} 0,002 - 0,006, R_{T} = 0,02 - 0,04 gemessen nach DIN 4768) geglättet und abgekühlt. Dabei ist die geometrische Form einer oder beider Walzen, abweichend von der Zylinderform, bombiert geschliffen. Die Bombage beträgt 0,1 bis 0,2 mm, bezogen auf den Durchmesser der Walze. Die Bombage ist von entscheidender Bedeutung für eine über die Breite der Folienbahn gleichmäßige Dickenverteilung.

Aufgrund der für dieses Verfahren typischen hohen Walzenspaltkräften werden die Polymermoleküle in Extrusionsrichtung langgestreckt. Die resultierende Orientierung führt zu einer ausgeprägten, deutlich zu hohen optischen Anisotropie.

### Vergleichsbeispiel 2

### Herstellung einer gegossenen Polycarbonat-Folie mit der Dicke von 0,08 mm erfolgt nach folgendem Verfahren:

Polycarbonat wird in einem mit einem Rührwerk ausgerüsteten Mischbehälter in einem Lösungsmittelgemisch aus Aceton und Methylenchlorid aufgelöst.
Grobe Verunreinigungen werden anschließend mit einer 2 µm-feinen Membranfilterpresse aus der Polycarbonatlösung entfernt. Die Polycarbonatlösung wird anschließend in einer Gießmaschine, welche aus einem von 2 Ø 3 m-Trommeln angetriebenen 48 m langen Stahlband besteht, zu einer 80 µm dicken Folie verarbeitet. Das während dem nachgeschalteten Trocknungsprozeß abgedampfte Lösungsmittel wird dem Prozeß wieder zurückgeführt.

Die resultierenden PC-Gießfolien besitzen zwar eine ausreichend niedrige optische Anisotrope, sie sind jedoch nicht frei von störenden optischen Defekten, wie Gelpartikeln und Streifen.

Bei der Gießfolienherstellung aus organischer Lösung handelt es sich um einen kostenaufwendigen Prozeß, der auch hohe Anforderungen an die Sicherheitstechnik richtet. Die resultierenden Folien sind nicht frei von dem hochgiftigen Lösungsmittel und damit, toxikologisch betrachtet, bedenklich.

Das großflächige Stahlband ist deutlich schwieriger in optisch hochwertigen Zustand herstellbar bzw. in einem solchen Zustand zu erhalten, als die deutlich geringere Oberfläche der Chill-Roll-Walze des erfindungsgemäßen Schmelzegießverfahrens. Hierdurch resultiert eine unzulässig hohe Anzahl von Streifen auf der Folienoberfläche. Trotz der Verwendung von 2 µm feinen Membranfilterpressen gelingt es nicht, die Lasersignalstärke verringernde, gelkörperartige Aggregate zu vermeiden. Im Gegensatz zur Schmelzeverarbeitung in Extruderanlagen liegt bei dem "Lösungsgießen" kein Scherfeld an, wodurch die schwer aufschließbaren hochmolekularen Anteile des Polycarbonats, aufgrund der Möglichkeit der "Mikrobrownschen Bewegung", d.h. den Zustand einer möglichst geringen Grenzflächenenergie anstrebend, aggregieren.

Die Gelkörper- und Ziehstreifen verringem die Lasersignalstärke auf unzulässig niedriges Niveau, wodurch eine signifikante Anzahl von Fehlermeldungen beim Abspielen so geschützter CD-Systeme resultieren.

### Bezugszeichen

- 10 -: Schmelzefilm
- 15 -: Folie, aus dem Schmelzefilm gebildet
- 20 -: Chill-roll-Walze
- 30 -: Düse

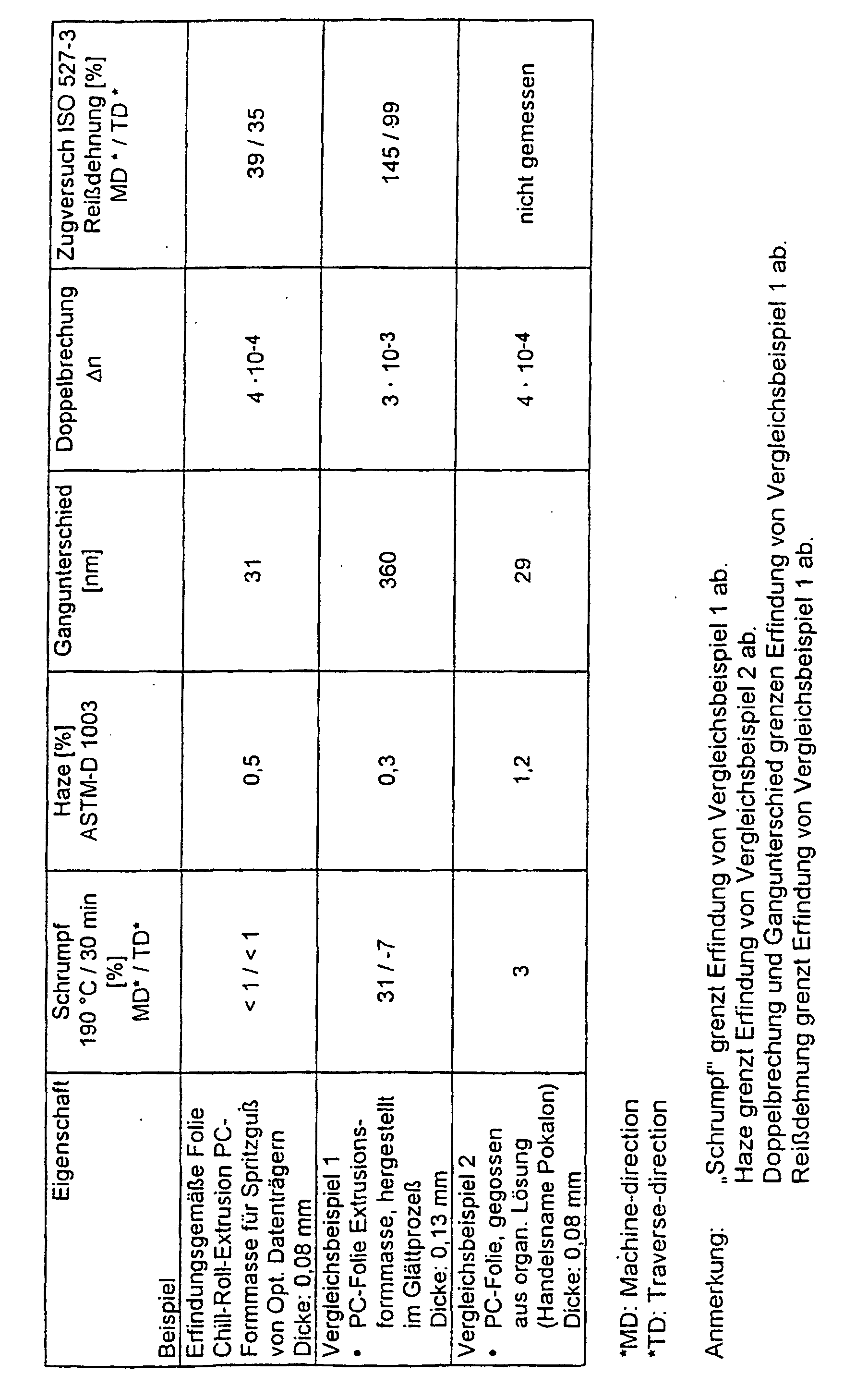

## Patentansprüche

1. Verfahren zur Herstellung einer optisch nahezu isotropen Kunststoff-Folie aus linearem oder verzweigten Polycarbonat,
**dadurch gekennzeichnet,**
**daß** man eine Polycarbonat**-Schmelze mit einem mittleren Molekulargewicht Mw von 10.000 bis 40.000** im Chill-Roll-Prozeß schmelzegießt.

2. Verfahren nach Anspruch 1, **dadurch gekennzeichnet, daß** die innere Oberfläche der Extrusionsdüse in Extrusionsdüsenlippenbereich eine Rauhtiefe nach DIN 4768 R_{A} von 0,025 bis 0,002 aufweist.

3. Verfahren nach Anspruch 1 oder 2, **dadurch gekennzeichnet, daß** die innere Oberfläche der Extrusionsdüse mit einem die Polycarbonat-Schmelze abweisenden Agens versehen ist.

4. Polycarbonat-Folie mit einer Dicke von weniger als 200 µm, erhältlich nach einem Verfahren nach einem oder mehreren der Ansprüche 1 bis 3.

5. Verwendung von Polycarbonat-Folien nach Anspruch 4 als Verkratzschutzfolien für optische Datenträger.

6. Verwendung von Polycarbonat-Folien nach Anspruch 4 als Trägermaterialien für optische Datenträger.

7. Verwendung von Polycarbonat-Folien nach Anspruch 4 als Basismaterialien für die Herstellung von Overlayfolien für Displays und Bildschirme

## Claims

1. Process for producing an optically virtually isotropic plastic film from straight-chain or branched polycarbonate,
**characterised in that**
a polycarbonate melt with a mean molecular weight Mw of 10,000 to 40,000 is fusion cast by the chill roll process.

2. Process according to claim 1, **characterised in that** the inner surface of the extrusion die in the region of the lips of the extrusion die has a peak-to-valley height according to DIN 4768 R_{A} of 0.025 to 0.002.

3. Process according to claim 1 or 2, **characterised in that** the inner surface of the extrusion die is provided with an agent that repels the polycarbonate melt.

4. Polycarbonate film with a thickness of less than 200 µm, obtainable by a process according to one or more of claims 1 to 3.

5. Use of polycarbonate films according to claim 4 as scratch-resistant films for optical data carriers.

6. Use of polycarbonate films according to claim 4 as carrier materials for optical data carriers.

7. Use of polycarbonate films according to claim 4 as basic materials for producing overlay films for displays and display screens.

## Revendications

1. Procédé de fabrication d'une feuille de matière synthétique optiquement presque isotrope en polycarbonate linéaire ou ramifié,
**caractérisé en ce qu'**
on coule à l'état fondu une masse fondue de polycarbonate ayant un poids moléculaire moyen M_{w} de 10 000 à 40 000 dans un procédé à rouleau réfrigérant.

2. Procédé selon la revendication 1,
**caractérisé en ce que**
la surface interne de la buse d'extrusion dans la zone des lèvres de la buse pour extrusion présente une profondeur de rugosité selon DIN 4768 R_{A} de 0,025 à 0,002.

3. Procédé selon la revendication 1 ou 2,
**caractérisé en ce que**
la surface interne de la buse d'extrusion est munie d'un agent repoussant la masse fondue de polycarbonate.

4. Feuille de polycarbonate ayant une épaisseur inférieure à 200 µm, que l'on peut obtenir selon un procédé d'une ou plusieurs des revendications 1 à 3.

5. Utilisation de feuilles de polycarbonate selon la revendication 4, comme feuille de protection contre les éraflures pour supports de données optiques.

6. Utilisation de feuilles de polycarbonate selon la revendication 4, comme matériaux support pour supports de données optiques.

7. Utilisation de feuilles de polycarbonate selon la revendication 4, comme matériaux de base pour la fabrication de feuilles de revêtement pour affichages et écrans.
